# EUROPÄISCHE PATENTSCHRIFT

(11) **EP 0 991 843 B1**
(45) Veröffentlichungstag und Bekanntmachung des Hinweises auf die Patenterteilung: **09.07.2003**
(21) Anmeldenummer: 99920737.6
(22) Anmeldetag: 22.04.1999
(51) Int. Cl.: E06B 3/96

(54) **VORRICHTUNG FÜR EINE ECKVERBINDUNG VON KUNSTSTOFF-HOHLPROFILEN**
DEVICE FOR AN ANGLE JOINT OF PLASTIC HOLLOW SECTIONS
DISPOSITIF POUR UN ASSEMBLAGE ANGULAIRE DE PROFILES CREUX EN PLASTIQUE

(30) Priorität: 25.04.1998 DE 19818632
(43) Veröffentlichungstag der Anmeldung: 12.04.2000
(73) Patentinhaber: Veka AG, 48324 Sendenhorst (DE)
(72) Erfinder: OFFERS, Johannes-Ulrich, D-48231 Hoetmar (DE)
(74) Vertreter: Hoffmeister, Helmut, Dr. Dipl.-Phys.
(86) Internationale Anmeldenummer: EP9902707
(87) Internationale Veröffentlichungsnummer: WO99055996

(56) Entgegenhaltungen:
- EP-A- 0 016 257
- EP-A- 0 288 756
- DE-A- 1 909 971
- DE-A- 2 206 499
- FR-A- 2 283 295

## Beschreibung

Die Erfindung betrifft eine Vorrichtung für eine Eckverbindung von Kunststoff-Hohlprofilen, in deren Hohlkammern wenigstens teilweise Metall-Versteifungsprofile mit einer Metall-Profilhohlkammer angeordnet und deren Enden wenigstens teilweise mit einem in einer Gehrungsschnittebene unter einem in der Praxis üblichen Winkel liegenden Gehrungsschnitt versehen sind, die aufweist
- einen Klebstoff,
- Kunststoff-Einsatzstücke mit einem Einsatzkörper die in Gebrauchs-Lage in die Metall-Profilhohlkammer wenigstens teilweise eingesetzt und mit dem Klebstoff wenigstens teilweise gehalten und mit denen die Kunststoff-Hohlprofile in ihren Gehrungsschnitten zu verbinden sind

Eine Vorrichtung der eingangs genannten Art ist aus der DE-A-1 775 385 bekannt. Hierbei werden zwei Hohlprofile zu einer Eckverbindung zusammengefügt, wobei die Enden auf Gehrung geschnitten sind. Die Hohlprofile bestehen aus einem Kunststoff. In die Hohlprofile sind metallische Versteifungsrohre eingeführt. Die Rohre enden mit Abstand von den Enden der Hohlprofile. Die Verbindung zwischen den Hohlprofilen wird durch Einsatzstücke hergestellt. Diese werden völlig in das Hohlprofil eingeschoben und mit Hilfe eines Klebers im Hohlprofil festgeklebt. Die Verbindung der Hohlprofile sowohl untereinander als auch mit den Einsatzstücken und deren Verbindung untereinander wird durch Schweißen der Verbindungsfugen hergestellt.

Nachteilig ist, daß der Kleber vor dem Einsetzen der Einsatzstücke entweder in den Hohlraum ein- oder auf das Einsatzstück aufgebracht werden muß. Beim Einschieben des Einsatzstückes in das Hohlprofil wird der Kleber vom Einsatzstück herunter und aus der Hohlkammer des Hohlprofiles herausgeschoben. Hierdurch liegt das Einsatzstück hauptsächlich nur an den Wänden der Hohlkammer an, wird aber aufgrund des fehlenden Klebers in ihr nicht fest eingeklebt, so daß sich das Einsatzstück herauslösen kann. Der nach außen heraustretende Kleber verschmutzt darüber hinaus die Gehrungsschnittfläche und muß von Hand entfernt werden.

Aus der DE-A-2 728 306 ist eine Verbindung zwischen einem Universaldrehgelenk und einer Welle bekannt. Beide weisen ein Endstück auf, das zylindrisch ist. Das Endstück des Gelenks hat ein Kanalsystem zur Aufnahme eines Klebstoffs mit einer Reihe in Umfangrichtung sich erstreckenden Nuten.

Nachteilig ist, daß die Nuten nur schmale Klebeflächen zwischen den Endstücken zulassen. Außerdem fließt der eingesetzte Klebstoff aufgrund der Schwerkraft aus den Nuten vor der Aushärtung teilweise wieder aus, so daß an diesen Stellen die Klebeverbindung unterbrochen damit insgesamt keine ausreichende Festigkeit aufweist.

Aus der EP-B- 0 016 257 ist ein Verbinder zum Aufbauen von Hohlrahmengestellen bekannt, der einen Klebespalt aufweist, der zwischen der Wandung eines Vierkantrohres und dem Verkantrohr liegt. Eine Kleberzuführung für Kleberinnen erfolgt über eine Öffnung. Der Kleber wird unter Druck in die Höhe der Kleberinnen geführt, um sich anschließend über Stichgraben gleichmäßig in den Klebespalten zu verteilen.

Auch wenn Lufteinschlüsse durch ein Ausströmen der Luft an den Enden der Spalte vermieden werden, fließt der Kleber aufgrund der Schwerkraft vor dem Aushärten aus dem Spalt, so daß ein Teil der Klebefläche ohne Kleberfüllung ist.

Es stellt sich deshalb die Aufgabe, eine Vorrichtung für eine Eckverbindung von Kunststoff-Hohlprofilen der eingangs genannten Art so weiterzuentwickeln, daß das Einkleben der Kunststoff-Einsatzstücke und die Eckverbindung der Kunststoff-Hohlprofile einfach und sicher herzustellen sind.

Erfindungsgemäß wird diese Aufgabe durch die Merkmale des Anspruches 1 gelöst.

Die mit der Erfindung erzielten Vorteile bestehen insbesondere darin, daß der Klebstoff erst dann eingebracht wird, wenn das jeweilige Kunststoff-Einsatzstück eingesetzt worden ist. Das Klebstoff-Kanalsystem sorgt dafür, daß wenigstens die Klebstoff-Poolausnehmungen mit dem flüssigen Kunststoff ausgefüllt werden. Hierdurch wird der Klebstoff gezielt in ausgewählte Zonen zwischen dem Kunststoff-Einsatzstück und dem Metall-Versteifungsprofil gebracht. Die Klebstoff-Poolausnehmungen sorgen dafür, daß der Klebstoff in einem begrenzten Areal gehalten wird. Ähnlich einem Swimmingpool können diese dann anstelle mit Wasser gezielt mit Klebstoff befüllt werden. Die Umfassungen der Klebstoff-Poolausnehmungen sorgen dafür, daß der flüssige Klebstoff nicht seitwärts verlaufen kann. Wird mehr Klebstoff zugeführt, als die Klebstoff-Poolausnehmung in der Lage sind aufzunehmen, kann dieses Mehr an Klebstoff so dosiert werden, daß Haarspalte zwischen dem Einsatzkörper und den Wandungen der Metall-Profilhohlkammer ausgefüllt werden. Außerdem sichern die Harspalte ein Entlüften der Klebstoff-Poolausnehmungen beim Einbringen des Klebstoffs. Die Thixotropie des 2-Komponenten-Polyurethan-Reaktionsklebstoffs als Klebstoff, sorgt dafür, daß Fließfähigkeit beim Einbringen und die Erstarrung nach Ausfüllung der wannenförmigen Klebstoff-Poolausnehmungen gesichert ist. Der 2-Komponenten-Polyurethan-Reaktionsklebstoff liegt jetzt unverrückt und großflächig dort, wo er hingehört, nämlich zwischen dem Kunststoff-Einsatzstück und dem Metall-Versteifungsprofil. Nach dem Aushärten entsteht so eine großflächige und haltbare Klebverbindung. Der in der Gehrungsschnittebene liegende Gehrungsschnittkörper sorgt dann dafür, daß es zu einer sicheren Verbindung der einzelnen Kunststoff-Hohlprofile kommt. In welchem Winkel die Gehrungsschnittebene liegt, hängt von den jeweiligen Einsatzbedingungen ab. Üblicherweise liegt die Gehrungsschnittebene bei 45°, so daß mehrere Kunststoffprofile zu einem Rahmen zusammengeschweißt werden können.

Der 2-Komponenten-Polyurethan-Reaktionsklebstoff kann lösungsmittelfrei sein. Hierdurch werden gesundheitliche Schäden bei seiner Verarbeitung vermieden.

Der 2-Komponenten-Polyurethan-Reaktionsklebstoff kann folgende Komponenten aufweisen:
- eine Binder-Komponente, die aus anorganisch gefüllten Polyol-Komponente besteht, und
- eine Härter-Komponente, die auf einem anorganisch gefüllten 4,4 Diphenylmethandiisocyanat basiert.

Diesem Gemisch können anorganische Füllstoffe/Pigmente und pyrogene Kieselsäuren beigemischt werden. Mit diesen wird die Thixotropie erzielt. Hierdurch ist es möglich, den Klebstoff zu mischen, leicht zu injizieren und sich gleichmäßig in den Klebstoff-Poolausnehmungen zu verteilen. Läßt der Einspritzdruck auf dem Klebstoff nach, bleibt der Klebstoff stehen, d.h. er läuft nicht weg. Es wird so gesichert, daß er an den Stellen aushärtet, an denen eine großflächige Klebeverbindung zu realisieren ist.

Der Einsatzkörper kann der Konfiguration der Hohlkammer angepaßt sein. Da die Hohlkammern insbesondere bei Kunststoff-Fensterprofilen im Querschnitt rechteckig sind, kann der Einsatzkörper entsprechend quaderförmig ausgebildet sein. Der quaderförmige Einsatzkörper verfügt dabei über solche Außenmaße, daß er sich an die Hohlkammer einschieben läßt. In seine sich an den Gehrungsschnittkörper anschließenden Deckflächen kann je eine Klebstoff-Poolausnehmung abgesenkt sein. Hierdurch wird sichergestellt, daß der 2-Komponenten-Polyurethan-Reaktionsklebstoff hinter dem Gehrungsschnittkörper einfließt und so ein Verschmutzen des Zwischenbereiches zwischen Einsatzstück und Kunststoffprofil wirksam vermieden wird.

Die Klebstoff-Poolausnehmungen können einen im wesentlichen ebenen Wannenboden aufweisen, so daß eine großflächige, gleichdicke Klebstoffschicht entsteht.

Die Klebstoff-Poolausnehmungen können von den Deckflächen bis zu den Wannenböden zwischen 0,01 mm bis 2 mm abgesenkt sein. Der aus den Klebstoff-Austrittsöffnungen in die Klebstoff-Poolausnehmungen bildet dann einen Klebstoff-Film, dessen Dicke durch eine festgelegte Klebstoff-Pooltiefe bestimmt wird. Hierdurch erhält der Klebstoff die Möglichkeit, seine klebenden Eigenschaften unter günstigsten Voraussetzungen zu entfalten.

Dem 2-Komponenten-Polyurethan-Reaktionsklebstoff kann ein Beschleuniger beigegeben werden, der nach einer Dosierung der beiden Komponenten homogen mit zu mischen ist. Hierdurch läßt sich die Funktionsfestigkeit und damit die Verarbeitungszeit je nach Zugabe des Beschleunigers beliebig verkürzen.

Der 2-Komponenten-Polyurethan-Reaktionsklebstoff kann durch eine Klebstoff-Auslaßpistole mit einem Kartuschenhohlkörper in die Klebstoff-Eintrittsausnehmung eingebracht werden. In dem Kartuschenhohl-körper kann eine Mischspindel angeordnet sein. Die Mischspindel sorgt dafür, daß die aus der Klebstoff-Auslaßpistole austretenden beiden Komponenten gut durchmischt in die Klebstoff-Eintrittsausnehmung eintreten können.

Eine derartige Klebstoff-Auslaßpistole wird von ENDLICH, W. : Wichtig Dosierung und Mischung, in der praktiker Schweißen & Schneiden F 3794 6/96, S. 254 bis 258, beschrieben. Beim Einsatz zweikomponentiger Klebstoffe bedarf es beim Mischen besonderer Sorgfalt. Denn nur die gleichmäßige Verteilung der Komponenten ist die anschließende Verfestigung im gesamten Mischvolumen gewährleistet. Für diesen Mischvorgang wird ein Rohrmischer angegeben, der als Mischvorsatzdüse mit Kolbendosierern kombiniert ist. Im Inneren des Mischrohres ist eine Mischspindel angeordnet, die durch die Zuführung der beiden Komponenten des Klebstoffes in Drehung versetzt wird.

Ein Ausführungsbeispiel der Erfindung ist in der Zeichnung dargestellt und wird im folgenden näher beschrieben. Es zeigen:
- Fig. 1: einen Fensterrahmen mit Eckverbindungen in einer schematischen, perspektivischen Darstellung,
- Fig. 2: einen Ausschnitt II aus einem Fensterrahmen gemäß Fig. 1 mit einer Eckverbindung in einer auseinandergezogenen, schematischen, perspektivischen Darstellung,
- Fig. 3: eine vergrößerte Teildarstellung eines Teils einer Eckverbindung gemäß Fig. 2 und
- Fig. 4: ein Kunststoff-Einsatzstück für eine Eckverbindung gemäß den Fig. 1 bis 3 in einer schematischen, perspektivischen Darstellung.

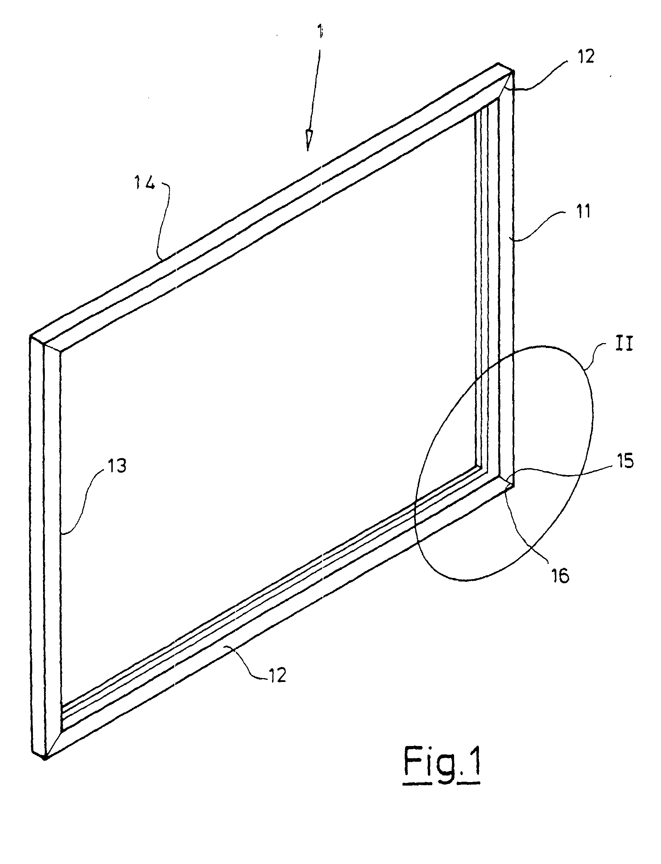

In Fig. 1 ist ein Fensterrahmen 1 dargestellt, der aus Kunststoff-Hohlprofilen 11, 12, 13, 14 zusammengesetzt ist.

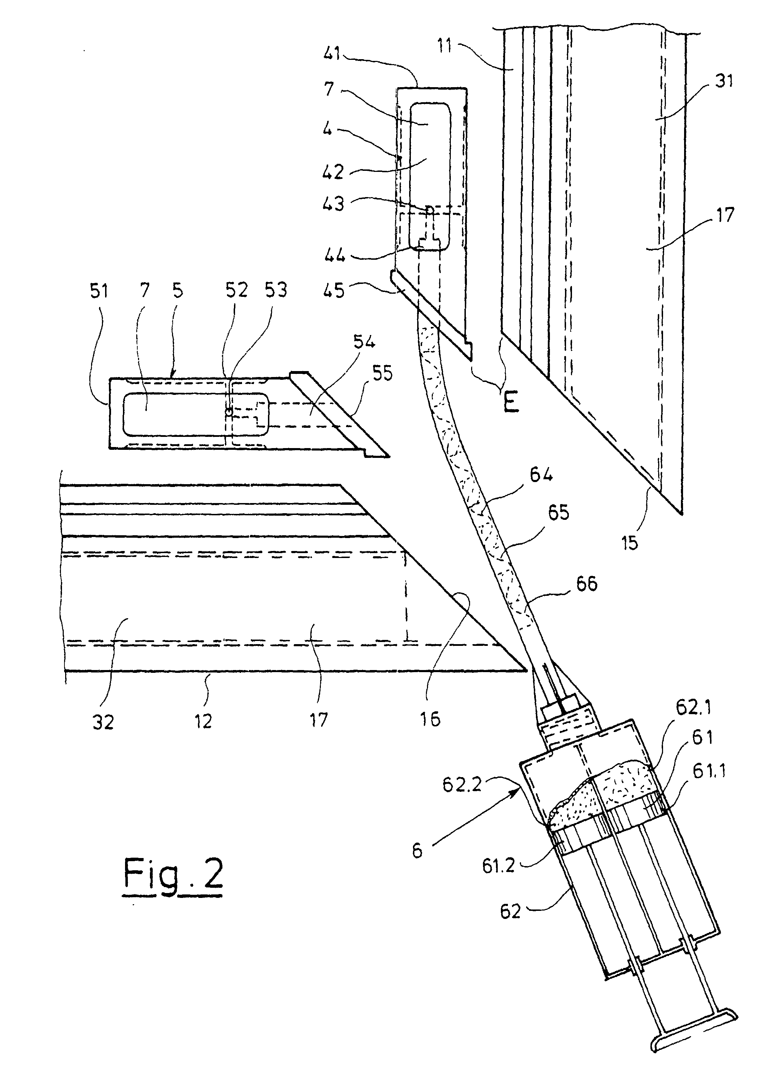

Wie insbesondere Fig. 2 zeigt, sind die Kunststoff-Hohlprofile an ihren Enden mit einem Gehrungsschnitt 15, 16 versehen. Die Gehrungsschnitte liegen in einer Gehrungsschnittebene E mit einem Winkel von 45°. Diese Neigung der Gehrungsschnittebene E sichert, daß die einzelnen Kunststoff-Hohlprofile 11, ..., 14 jeweils im rechten Winkel zueinander zum Fensterrahmen 1 zusammengefügt werden können. Die Gehrungsschnittebene E kann in einem anders gewählten Winkel zwischen 0° und 180° liegen, so daß die Kunststoff-Hohlprofile zu unterschiedlichsten Konfigurationen zusammengefügt werden können.

Wie das Kunststoff-Hohlprofil 11 verfügen auch die anderen Kunststoff-Hohlprofile über eine im wesentlichen quadratisch ausgebildete Hohlkammer 17, die auf der einen Ende von Feuchtigkeitsleitkammern 18 und auf der Gegenseite von Isolierkammern 21 wenigstens teilweise begrenzt wird. Vor den Feuchtigkeitsleitkammern 18 liegt ein Blendrahmen 19 und vor den Isolierkammern 21 ein Sichtrahmen 20. Das Ende des Kunststoff-Hohlprofiles schließt mit dem Gehrungsschnitt 15 ab.

Zur Versteifung der Kunststoff-Hohlprofile sind im Inneren Metall-Versteifungsprofile angeordnet. Die zu den Kunststoff-Hohlprofilen 11 und 12 gehörigen Metall-Versteifungsprofile sind mit den Bezugsziffern 31 und 32 bezeichnet. Die Metall-Versteifungsprofile sind quadratisch ausgebildet. Die Metall-Versteifungsprofile sind entweder ein einteiliges Vierkantrohr oder werden aus einem Metallstreifen zu einem derartigen Vierkantrohr gebogen, so daß sie über eine Metall-Profilhohlkammer 33 verfügen.

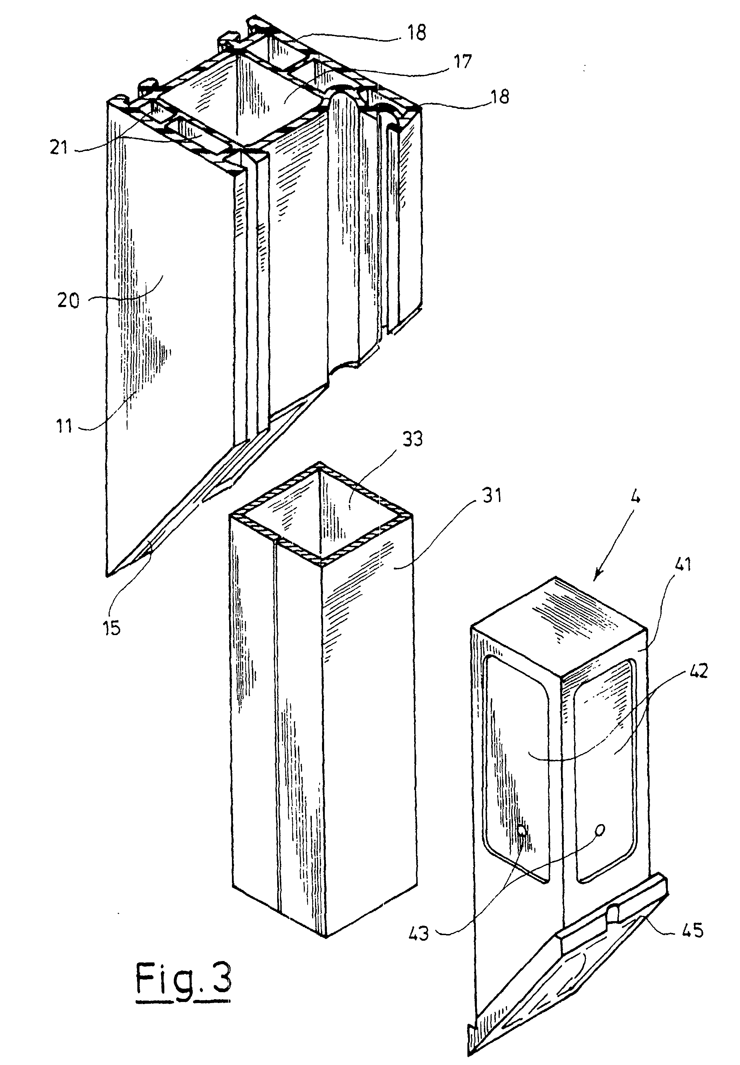

In den Fig. 2 bis 4 sind Kunststoff-Einsatzstücke 4, 5 dargestellt.

Die Kunststoff-Einsatzstücke 4, 5 bestehen aus
- einem Einsatzkörper 41, 51 und
- einem Gehrungsschnittkörper 45, 55, der in der bereits beschriebenen Gehrungsschnittebene E liegt und mit dem Einsatzkörper 41, 51 verbunden ist.

Der Einsatzkörper ist quaderförmig ausgebildet und hat einen im wesentlichen quadratischen Querschnitt. Auf seinen Deckflächen 48 sind Klebstoff-Poolausnehmungen 42, 52 angeordnet.

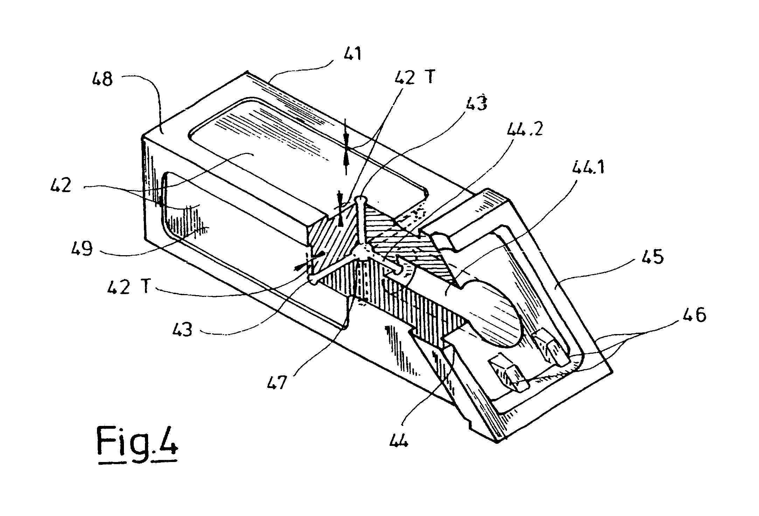

Wie insbesondere aus Fig. 4 zu ersehen ist, sind die Klebstoff-Poolausnehmungen wannenförmig ausgebildet und verfügen über einen ebenen Wannenboden 49. Der Wannenboden 49 ist gegenüber den Deckflächen 48 um eine Klebstoff-Pooltiefe 42T abgesenkt. Die Klebstoff-Pooltiefe kann zwischen 0,01 mm und 2 mm betragen. Im Wannenboden jeder Klebstoff-Poolausnehmung 42, 52 ist wenigstens eine Klebstoff-Austrittsöffnung 43, 53 ähnlich einem Wannenabfluß angeordnet. Vom Gehrungsschnittkörper 45, 55 ausgehend, ist eine Klebstoff-Eintrittsausnehmung 44, 54 vorgesehen.

Erfindungswesentlich ist ein Klebstoffkanal-Leitsystem 47, das die einzelnen Klebstoff-Austrittsöffnungen 43, 53 mit den Klebstoff-Eintrittsausnehmungen 44, 54 verbindet. Wie insbesondere Fig. 4 zeigt, beginnt die Klebstoff-Eintrittsausnehmung 44, 54 mit einem Kartuschenkanal 44.1 größeren Durchmessers, der dann als ein Einleitkanal 44.2 mit einem kleineren Durchmesser weitergeführt wird. Der Durchmesser des Einleitkanals entspricht denen der übrigen Leitkanäle des Kunststoffkanal-Leitsystems 47. Dieser Durchmesser ist so gewählt, daß ein 2-Komponenten-Polyurethan-Reaktionsklebstoff 7 - im folgenden Klebstoff 7 - im flüssigen Zustand leicht durch das Klebstoffkanal-Leitsystem 47 fließen kann und im erstarrten Zustand sicher in den Klebstoff-Poolausnehmungen 42, 52 stehenbleibt.

Der Klebstoff 7 besteht aus
- einer anorganisch gefüllten Polyol-Komponente und
- einer Härter-Komponente, die auf einem anorganisch gefüllten 4,4 Diphenylmethandiisocyanat basiert.

Beide Einzelkomponenten werden im Mischungsverhältnis 1:1 mittels Handdruck- oder Druckluftpistole über einen Statikmischer direkt und sicher homogen vermischt.

Diesem Gemisch sind anorganische Füllstoffe/Pigmente und pyrogene Kieselsäuren beigemischt, durch die ein thixotropisches Verhalten erzielt wird.

Thixotropie ist die Bezeichnung für die sehr verbreitete Erscheinung, daß Gele sich beim Anwenden mechanischer Kräfte verflüssigen, nach Aufhören der mechanischen Beanspruchung aber wieder verfestigen. Die Viskosität fließender Stoffe nimmt also unter dem Einfluß zunehmender (abnehmender) Schubspannung oder Schergeschwindigkeit ab (zu).

Hierdurch ist es möglich, den Klebstoff 7
a) leicht zu mischen,
b) leicht zu injizieren und
c) sich gleichmäßig in den Klebstoff-Poolausnehmungen 42, 52 zu verteilen und nach deren Erreichen nicht mehr wegzulaufen.

Der Klebstoff 7 ist lösungsmittelfrei und härtet schwundfrei aus. Die Aushärtezeit beträgt bei +20°C 60% relativer Luftfeuchtigkeit bis zu 75% zirka zehn Stunden und bis zum Erreichen der Endfestigkeit zirka zwei Tage. Die Funktionsfestigkeit und damit verbunden die Verarbeitungszeit kann durch die Zugabe eines Beschleunigers beliebig verkürzt werden. Die Zugabe des Beschleunigers erfolgt nach Dosierung der beiden Komponenten und wird homogen mit dem Klebstoff 7 gemischt.

Die Zugfestigkeit des Klebstoffs 7 beträgt für Alu/Alu bei +20°C zirka 20,0 N/mm².

Wie Fig. 4 weiterhin zeigt, weist der Gehrungsschnittkörper 45, 55 einen umlaufenden Rahmen auf. Aus einer abgesenkten Grundfläche, von der der Kartuschenkanal ausgeht, ragen zwei nebeneinanderliegende Blöcke auf. Die Oberfläche des Rahmens und er Blöcke bildet insgesamt eine mit 46 bezeichnete Schweißfläche. Der Rahmen ist mit einem für den Schweißvorgang erforderlichen Ausnehmung versehen.

Das Herstellen der Eckverbindung, wie sie sich aus den dargestellten Ausführungsbeispielen ergibt, sei erläutert:

Die Enden der vier Kunststoff-Hohlprofile 11, ..., 14 werden jeweils mit einem Gehrungsschnitt 15, 16 versehen. Im Inneren der Hohlkammern 17 sind die Metall-Versteifungsprofile 31, 32 eingeschoben. Sie enden so vor den Gehrungsschnitten 15, 16, daß sich der Einsatzkörper 41, 51 vollkommen in ihre Metall-Profilhohlkammer 33 einschieben läßt.

Die Metall-Versteifungsprofile 31, 32 können mit einem geraden oder einem Gehrungsschnitt bis an die Gehrungsschnitte 15, 16 herangeführt werden. Bei einem Gehrungsschnitt sind die Metall-Versteifungsprofile selbst mit einem Gehrungsschnitt versehen, der in der gleichen Gehrungsschnittebene E wie der Gehrungsschnitt 15, 16 der Kunststoffprofile liegt. Die Einsatzkörper 41, 51 sind dabei so groß ausgebildet, daß sie in die Metall-Profilhohlkammer 33 eingeschoben werden können.

Wie Fig. 2 zeigt, kommen Kunststoff-Einsatzstücke 4, 5 zum Einsatz, die mit Einsatzkörpern 41, 51 ausgerüstet sind, die einen solchen Querschnitt und solche Abmessungen aufweisen, daß sie sich in die Metall-Profifhohlkammer 33 einschieben und in dieser leicht verpressen lassen. Das leichte Verpressen verhindert ein Herausrutschen der eingeschobenen Kunst-stoff-Einsatzstücke 4, 5. In den Kartuschenkanal 44.1 des eingeschobenen Kunststoff-Einsatzstückes 4 wird ein Kartuschenhohlkörper 64 eingeführt. Der Kartuschenhohlkörper 64 ist wie eine Spritzen-Kanüle, jedoch mit wesentlich größeren Abmessungen, ausgebildet. Im Inneren des Kartuschenhohlkörpers 64 ist eine Mischspindel 65 angeordnet. Die Mischspindel 65 besteht aus Spindelstücken 66. Jedes Spindelstück realisiert einen Spindeldrehgang um 160°. Die einzelnen Spindelstücke 66 sind im rechten Winkel aufeinandergesetzt und werden als Gruppe von einzelnen Spindelstücken 66 in das Innere des Kartuschenhohlkörpers 64 geschoben.

Der Kartuschenhohlkörper 64 ist mit einem Pistolenhohlzylinder 62 verbunden, der in zwei Teilzylinder 62.1 und 62.2 unterteilt ist. Im Pistolenhohlzylinder 62 ist ein Pistolenkolben 61 verstellbar. Er ist in zwei Teilkolben 61.1 und 61.2 unterteilt, die sich jeweils in den Teilzylindern 62.1 und 62.2 bewegen. In den Teilzylindern 62.1 und 62.2 befinden sich die beiden Komponenten des Klebstoffs 7. Beim Herunterdrücken des Pistolenkolbens 61 drücken dessen Teilkolben 61.1 und 61.2 die beiden Komponenten aus den Teilzylindern des Pistolenhohlzylinders in den Kartuschenhohlkörper 64. Hierbei dreht sich die Mischspindel 65 und sorgt für ein gutes Durchmischen beider Komponenten des Klebstoffs 7. Dieser tritt dann gemischt aus dem Kartuschenhohlkörper 64 in das Klebstoffkanal-Leitsystem 47 ein. Nach dem Durchfließen der einzelnen Kanäle tritt der Klebstoff 7 aus den Kunststoff-Austrittsausnehmungen 44 aus und füllt hierbei die gesamte Kunststoff-Poolausnehmung 42 aus und bleibt aufgrund der Thixotropie in ihr stehen.

Die Verarbeitungszeit des Klebstoffs 7 beträgt zirka zwölf Minuten. Bei kurzen Arbeitsunterbrechnungen kann innerhalb der Verarbeitungszeit bei erneuter Dosierung wieder frischer Klebstoff 7 in den Kartuschenhohlkörper 64 gebracht werden. So kann über einen ganzen Arbeitstag mit einem Kartuschenhohlkörper gearbeitet werden. Nach Arbeitsende kann der benutzte Kartuschenhohlkörper 64 auf der Klebstoff-Auslaßpistole 6 verbleiben. Bei neuem Arbeitsbeginn wird der Kartuschenhohlkörper 64 ersetzt.

In gleicher Art und Weise werden mit Hilfe der Klebstoff-Auslaßpistole 6 mit Hilfe des Kunststoffkanal-Leitsystems 47 die Klebstoff-Poolausnehmungen 52 befüllt. Nach dem Aushärten des Klebstoffs 7 ist das Kunststoff-Einsatzstück 4 bzw. 5 in der Metall-Profilhohlkammer 33 des Metail-Versteifungsprofils 31 bzw. 32 eingeklebt. Der eingeklebte Einsatzkörper 41, 51 setzt dabei mechanisch die Metall-Versteifungsprofile 31, 32 fort, so daß die Kunststoff-Hohlprofile 11, 12 so verhalten, als wären sie mit einem durchgängigen Versteifungsgerüst ausgekleidet. Das Auskleiden der Kunststoff-Hohlprofile 11, 12 mit einem Kunststoff-Einsatzstück bietet die Möglichkeit, die beiden Kunststoff-Hohlprofile 11, 12 an ihren Gehrungsschnitten 15, 16 an den Schweißflächen 46 miteinander zu verschweißen. Hierbei übernehmen die miteinander verschweißten Gehrungsschnittkörper 45, 55 die Hauptverbindung zwischen beiden Profilen.

In gleicher Art und Weise wird danach das Kunststoff-Hohlprofil 12 mit 13, 13 mit 14 und 14 mit 11 verbunden, so daß der in Fig. 1 gezeigte Fensterrahmen 1 fertiggestellt wird. Von besonderem Vorteil ist, daß die Einsatzkörper der einzelnen Kunststoff-Einsatzstücke in die mit dem Gehrungsschnitt versehenen Enden der Metall-Versteifungsprofile so mit Hilfe des Klebstoffs eingeklebt sind, daß die Kunststoff-Einsatzstücke integrierter Bestandteil der Enden dieser Profile sind. Durch das Klebstoffkanal-Leitsystem 47 wird der Klebstoff nur in solcher Menge und an solche Stellen gebracht, wo er voll seine bindenden Eigenschaften entfalten kann. Das Austreten von Klebstoff aus dem Verbindungsbereich wird vermieden. Darüber hinaus ist diese Art des Verklebens der Kunststoff-Einsatzstücke mit diesen Profilen fertigungstechnisch leicht umzusetzen. Die Aufwendungen an Arbeitszeit lassen sich drastisch verringern und der Einsatz von maschinellen Fertigungsschritten unter Verwendung von Maschinen bzw. Robotern einfach realisieren.

### Bezugszeichenliste

- 1: Fensterrahmen
- 11, 12, 13, 14: Kunststoff-Hohlprofil
- 15, 16: Gehrungsschnitt
- 17: Hohlkammer
- 18: Feuchtigkeitsleitkammer
- 19: Blendrahmen
- 20: Sichtrahmen
- 21: Isolierkammer
- 31, 32: Metall-Versteifungsprofil
- 33: Metall-Profilhohlkammer
- 4, 5: Kunststoff-Einsatzstück
- 41, 51: Einsatzkörper
- 42, 52: Klebstoff-Poolausnehmung
- 42T: Kunststoff-Pooltiefe
- 43, 53: Klebstoff-Austrittsöffnung
- 44, 54: Klebstoff-Eintrittsausnehmung
- 44.1: Kartuschenkanal
- 44.2: Einleitkanal
- 45, 55: Gehrungsschnittkörper
- 46: Schweißfläche
- 47: Klebstoffkanal-Leitsystem
- 48: Deckfläche
- 49: Wannenboden
- 6: Klebstoff-Auslaßpistole
- 61: Pistolenkolben
- 61., 61.2: Teilkolben
- 62: Pistolenhohlzylinder
- 62.1, 62.2: Teilzylinder
- 64: Kartuschenhohlkörper
- 65: Mischspindel
- 66: Spindelstück
- 7: 2-Komponenten-Polyurethan-Reaktionsklebstoff
- E: Gehrungsschnittebene

## Patentansprüche

1. Vorrichtung für eine Eckverbindung von Kunststoff-Hohlprofilen (11, 12, 13, 14), in deren Hohlkammern (17) wenigstens teilweise Metall-Versteifungsprofile (31, 32) mit einer Metall-Profilhohlkammer (33) angeordnet und deren Enden wenigstens teilweise mit einem in einer Gehrungsschnittebene (E) unter einem in der Praxis üblichen Winkel liegenden Gehrungsschnitt (15, 16) versehen sind, die aufweist
- einen Klebstoff (7),
- Kunststoff-Einsatzstücke (4, 5) mit einem Einsatzkörper (41, 51), die in Gebrauchs-Lage in die Metall-Profilhohlkammer (33) wenigstens teilweise eingesetzt und mit dem Klebstoff (7) wenigstens teilweise gehalten und mit denen die Kunststoff-Hohlprofile (11, 12, 13, 14) in ihren Gehrungsschnitten (15,16) zu verbinden sind,
**dadurch gekennzeichnet,**
- **daß** an dem Einsatzkörper (41, 52) ein in der Gehrungsschnittebene (E) liegender Gehrungschnittkörper (45, 55) angeordnet ist,
- **daß** auf dem Einsatzkörper (41, 51) wenigstens eine wannenförmige Klebstoff-Poolausnehmung (42, 52) angeordnet ist,
- **daß** in dem Einsatzkörper (41, 51) ein Klebstoffkanal-Leitsystem (47) derart angeordnet ist, daß mit einem thixotropen 2-Komponenten-Polyurethan-Reaktionsklebstoff (7) als Klebstoff von einer in eine vom Gehrungsschnittkörper (45, 55) ausgehenden Klebstoff-Eintrittsausnehmung (44, 54) über wenigstens eine Klebstoff-Austrittsöffnung (43, 53) die Klebstoff-Poolausnehmung (42, 52) wenigstens teilweise auszufüllen und nach dessen Aushärtung der Einsatzkörper (41, 51) eingeklebt ist.

2. Vorrichtung nach Anspruch 1, **dadurch gekennzeichnet, daß** der 2-Komponenten-Polyurethan-Reaktionsklebstoff (7) lösungsmittelfrei ist.

3. Vorrichtung nach Anspruch 1 oder 2, **dadurch gekennzeichnet, daß** der 2-Komponenten-Polyurethan-Reaktionsklebstoff (7)
- eine Binder-Komponente, die aus einer anorganisch gefüllten Polyol-Komponente besteht, und
- eine Härter-Komponente, die auf einem anorganisch gefüllten 4,4 Diphenylmethandiisocyanat basiert, aufweist, die in einem Mischungsverhältnis 1:1 zu mischen sind.

4. Vorrichtung nach einem der Ansprüche 1 bis 3, **dadurch gekennzeichnet, daß** der Einsatzkörper (41, 51) quaderförmig ausgebildet ist und in seine sich an den Gehrungsschnittkörper (45, 55) anschließenden Deckflächen (48) je eine wannenförmige Klebstoff-Poolausnehmung (42, 52) abgesenkt ist.

5. Vorrichtung nach einem der Ansprüche 1 bis 4, **dadurch gekennzeichnet, daß** Klebstoff-Poolausnehmungen (42, 52) einen im wesentlichen ebenen Wannenboden (49) aufweisen.

6. Vorrichtung nach einem der Ansprüche 1 bis 5, **dadurch gekennzeichnet, daß** die Klebstoff-Poolausnehmungen (42, 52) von den Deckflächen (48) bis zu den Wannenböden (49) zwischen 0,01mm bis 2mm abgesenkt sind.

7. Vorrichtung nach einem der Ansprüche 1 bis 6, **dadurch gekennzeichnet, daß** dem 2-Komponenten-Polyurethan-Reaktionsklebstoff (7) ein Beschleuniger zugebbar ist, der nach einer Dosierung der beiden Komponenten homogen mit zu mischen ist.

8. Vorrichtung nach einem der Ansprüche 1 bis 7, **dadurch gekennzeichnet, daß** der 2-Komponenenten-Polyurethan-Reaktionsklebstoff (7) durch eine Klebstoff-Auslaßpistole (6) mit einem Kartuschenhohlkörper (64), in dem eine Mischspindel (65) angeordnet ist, in die Klebstoff-Eintrittsausnehmung (44, 54) einbringbar ist.

## Claims

1. A device for a corner connection of plastic hollow profiles (11, 12, 13, 14), in the hollow chambers (17) of which there are disposed at least partially metal reinforcing profiles (31, 32) with a metal profile hollow chamber (33) and the ends of which are provided at least partially with a mitre cut situated in a mitre cut plane (E) at an angle which is customary in practice, said device comprising:
- an adhesive (7)
- plastic inserts (4, 5) with an
- insert member (41, 51),
which in the position of use are inserted at least partially into the metal profile hollow chamber (33) and are at least partially held with the adhesive (7) and with which the plastic hollow profiles (11, 12, 13, 14) are to be connected at their mitre cuts (15, 16),
**characterised in that**
- a mitre cut member (45, 55) situated in the mitre cut plane (E) is disposed on the insert member (41, 52),
- **in that** at least one trough-shaped adhesive pool recess (42, 52) is disposed on the insert member (41, 51),
- **in that** an adhesive duct guide system (47) is so disposed in the insert member (41, 51) that the adhesive pool recess (42, 52) is at least partially fillable with an adhesive in the form of a thixotropic two-component polyurethane reaction adhesive (7), from an adhesive entry recess (44, 54) starting from the mitre cut member (45, 55), via at least one adhesive exit opening (43, 53), and after the hardening thereof the insert member (41, 51) is stuck in.

2. A device according to claim 1, **characterised in that** the two-component polyurethane reaction adhesive (7) is solvent-free.

3. A device according to claim 1 or 2, **characterised in that** the two-component polyurethane reaction adhesive (7)
- comprises a binder component consisting of an inorganically filled polyol component, and
- a hardener component based on an inorganically filled 4,4 diphenylmethane diisocyanate,
which are to be mixed in a mixing ratio of 1:1.

4. A device according to any one of claims 1 to 3, **characterised in that** the insert member (41, 51) is of cubic shape and a trough-shaped adhesive pool recess (42, 52) is sunk into each of its top surfaces (48) adjoining the mitre cut member (45, 55).

5. A device according to any one of claims 1 to 4, **characterised in that** adhesive pool recesses (42, 52) have a substantially flat trough bottom (49).

6. A device according to any one of claims 1 to 5, **characterised in that** the adhesive pool recesses (42, 52) are sunk between 0.01 mm to 2 mm from the top surfaces (48) to the trough bottoms (49).

7. A device according to any one of claims 1 to 6, **characterised in that** an accelerator can be added to the two-component polyurethane reaction adhesive (7) and is to be mixed homogeneously therewith after dispensing of the two components.

8. A device according to any one of claims 1 to 7, **characterised in that** the two-component polyurethane reaction adhesive (7) can be introduced into the adhesive entry recess (44, 54) by means of an adhesive discharge gun (6) with a cartridge hollow member (64) in which a mixing spindle (65) is disposed.

## Revendications

1. Dispositif d'assemblage pour profilés creux en plastique (11, 12, 13, 14) dans les compartiments creux (17) desquels sont placés au moins partiellement des profilés métalliques de renfort (31, 32) avec un compartiment creux de profilé métallique (33) et dont les extrémités sont au moins partiellement pourvues d'une coupe d'onglet (15, 16) d'un angle quelconque suivant la pratique courante et formant un plan de coupe d'onglet (E), ce dispositif comprenant :
- une colle (7),
- des inserts en plastique (4, 5) comportant un corps d'insert (41, 51), qui sont au moins partiellement insérés en position d'emploi dans les profilés creux des profilés métalliques (33) et au moins partiellement fixés par la colle (7), et avec lesquels les profilés creux en plastique (11, 12, 13, 14) sont à assembler au niveau de leurs coupes d'onglet (15, 16),
**caractérisé en ce que** :
- un corps de coupe d'onglet (45, 55) est placé sur le corps d'insert (41, 51) dans le plan de la coupe d'onglet (E),
- au moins un réservoir de colle en forme de cuvette (42, 52) est placé sur le corps d'insert (41, 51),
- le corps d'insert (41, 51) comporte un système de canaux d'amenée de colle (47) placé de telle sorte que le réservoir de colle (42, 52) peut être au moins partiellement rempli avec une colle de polyuréthane à liant réactionnel à deux constituants thixotropique (7) amenée depuis une entrée de colle (44, 54) dans le corps de coupe d'onglet (45, 55) par au moins un orifice de sortie de colle (43, 53), et que le corps d'insertion (41, 51) est collé après durcissement de cette colle.

2. Dispositif suivant la revendication 1, **caractérisé en ce que** la colle de polyuréthane à liant réactionnel à deux constituants (7) est sans solvants.

3. Dispositif suivant la revendication 1 ou 2, **caractérisé en ce que** la colle de polyuréthane à liant réactionnel à deux constituants (7) est composée :
- d'un liant composé de constituants anorganiques au polyalcool
- et d'un durcissant anorganique à base de diisocyanate de diphénylméthane 4,4,
qui sont à mélanger dans une proportion de mélange de 1/1.

4. Dispositif suivant l'une quelconque des revendications 1 à 3, **caractérisé en ce que** le corps d'insert (41, 51) est de forme parallélépipédique et **en ce qu'**un réservoir de colle en forme de cuvette (42, 52) est enfoncé dans chacune de ses faces supérieures (48) faisant suite au corps de coupe d'onglet (45, 55).

5. Dispositif suivant l'une quelconque des revendications 1 à 4, **caractérisé en ce que** les conduits de colle (42, 52) présentent un fond de cuvette (49) essentiellement plan.

6. Dispositif suivant l'une quelconque des revendications 1 à 5, **caractérisé en ce que** le réservoir de colle (42, 52) est enfoncé d'entre 0,01 et 2 mm entre la face supérieure (48) et le fond de cuvette (49).

7. Dispositif suivant l'une quelconque des revendications 1 à 6, **caractérisé en ce qu'**un activateur peut être ajouté à la colle polyuréthane à liant réactionnel à deux constituants (7), lequel est à mélanger aux deux constituants de manière homogène après dosage de ces derniers.

8. Dispositif suivant l'une quelconque des revendications 1 à 7, **caractérisé en ce que** la colle de polyuréthane à liant réactionnel à deux constituants (7) peut être amenée dans le réservoir de colle à l'aide d'un pistolet à colle (6) avec un corps creux de cartouche (64) dans laquelle est placée une spirale de mélange (65).
